# EUROPEAN PATENT APPLICATION

(11) **EP 2 779 063 A1**
(43) Date of publication of application: **17.09.2014**
(21) Application number: 14250044.6
(22) Date of filing: 17.03.2014
(51) Int. Cl.: G06Q 20/02, G06Q 20/40

(54) **Systems and methods for processing payment card transactions**

(30) Priority: 15.03.2013 US 201313838557
(71) Applicant: Mastercard International Incorporated, Purchase NY 10577 (US)
(72) Inventor: Van Den Broeck, Rigobert, 1852 Grimbergen (BE); Sass, Michael, 1180 Uccle (BE); Rowe, Philip, 1150 Woluwé Saint Pierre (BE); Costoya Aldemunde, Jesus Antonio, 1200 Woluwé Saint Lambert (BE)
(74) Representative: Beresford, Keith Denis Lewis

(57) **Abstract**

Systems and methods for processing payment card transactions for a payment card using a payment card processing system are disclosed. Method for processing one or more payment card transactions for a payment card using a payment processing system in communication with a computer readable storage medium includes receiving an authorization request from an acquirer and a corresponding authorization response from a card issuer, the authorization response including a status identifier for the payment card, associating the payment card with a payment card listing based on the status identifier, the payment card listing indicating transaction processing information relating to the payment card, and storing the payment card listing in the computer readable storage medium.

## Description

### CROSS-REFERENCE TO RELATED APPLICATIONS

The present application claims priority to U.S. Application Serial No. 13/838,557 filed March 15, 2013, the contents of which is incorporated by reference in its entirety herein.

### BACKGROUND

The disclosed subject matter relates to payment processing systems for processing payment card transactions.

When a payment card is lost or stolen, a customer can report the loss or theft to their issuer bank, who will then decline subsequent transactions made using the payment card. The issuer can also provide a listing of such lost or stolen payment cards to the payment network. However, some issuers, including many smaller issuers, fail to update such listings in a timely fashion, or not at all, due to the costs of devoting resources to providing this data to the payment network. This can lead to undesirable results, such as when the issuer bank is offline and therefore unable to approve or decline the payment transaction. In such circumstances, authorization processing can fall back to the payment network, which may approve a transaction made using a stolen card due to an out-of-date database of stolen cards.

Such fraud can have a negative impact on the brand image of a payment card company. As such, there is an opportunity for systems and methods to reduce issuer operational costs and increase fraud protection in business continuity crisis scenarios (e.g., when an issuer's system goes down).

### SUMMARY

Systems and methods for processing one or more transactions for a payment card using a payment card processing system are provided.

According to one aspect of the disclosed subject matter, a system for processing one or more payment transactions for a payment card using a payment processing system is provided. The system can include one or more processors and one or more computer readable storage media embodying software. The software can be configured, when executed by one or more of the processors, to receive, by the payment processing system, an authorization request from an acquirer and a corresponding authorization response from a card issuer. The authorization response can include a status identifier for the payment card. The software can associate the payment card with a payment card listing, and the payment card listing can indicate transaction processing information relating to the payment card based on the status identifier. The software can then store the payment card listing in one or more of the computer readable storage media, such as in a database.

In some embodiments, the software can be further configured when executed to receive, by the payment processing system, a further authorization request from a further acquirer. The software can then determine that the payment card is associated with the payment card listing. The software can provide a response to the further authorization request to the further acquirer based on the transaction processing information relating to the payment card.

In some embodiments, the payment card listing can be a negative listing. The payment card can be associated with the negative listing when the status identifier indicates that the payment card is lost or stolen or when the issuer instructs the acquirer to "capture the card". When the payment card is associated with the negative listing and where the issuer bank is offline, the response provided to the further acquirer can be to decline the transaction. In some embodiments, the payment card listing can be a positive listing. The payment card can be associated with the positive listing, such as when the status identifier indicates that the transaction involving the payment card is authorized or that the payment card has a VIP status. When the payment card is associated with the positive listing, the response provided to the further acquirer can be to authorize the transaction.

According to another aspect of the disclosed subject matter, a method for processing one or more payment card transactions for a payment card using a payment processing system in communication with a computer readable storage medium is disclosed. The method can include receiving, by the payment processing system, an authorization request from an acquirer and a corresponding authorization response from a card issuer, the authorization response including a status identifier for the payment card. The payment card can be associated with a payment card listing based on the status identifier. The payment card listing can indicate transaction approval information relating to the payment card. The payment card listing can be stored in the computer readable storage medium.

In some embodiments, the method can further include receiving, by the payment processing system, a further authorization request from a further acquirer. The method can include determining whether the payment card is associated with a payment card listing. The method can further include providing a response to the further authorization request to the further acquirer based on the determination that the payment card is associated with the payment card listing.

According to another aspect of the disclosed subject matter, a payment network for processing one or more payment card transactions for a payment card is provided.

### BRIEF DESCRIPTION OF THE DRAWINGS

Further features of the invention, its nature, and various advantages will be more apparent from the following detailed description of the preferred embodiments and the accompanying drawings in which:
FIG. 1 is a diagram illustrating an exemplary system for processing payment card transactions for a payment card using a payment processing system.
FIG. 2 is a diagram illustrating an exemplary method for processing payment card transactions for a payment card using a payment processing system in communication with a computer readable storage medium.
FIG. 3 is a diagram illustrating an exemplary computer system according to the disclosed subject matter.

### DETAILED DESCRIPTION

Reference will now be made in detail to the various exemplary embodiments of the disclosed subject matter, exemplary embodiments of which are illustrated in the accompanying drawings. The structure and corresponding method of operation of the disclosed subject matter will be described in conjunction with the detailed description of the system.

The systems and methods presented herein can be used for processing one or more transactions for a payment card using a payment card processing system. As used herein, financial transaction cards, payment account cards or payment cards can refer to credit cards, debit cards, purchasing cards, identification cards, and prepaid cards. These cards can all be used as a method for authenticating a person or account in a transaction. As described herein, the term "financial transaction card," "payment account card," or "payment card" can include cards such as credit cards, debit cards, and prepaid cards, but can also include any other devices configured to hold identification information of a person, entity, or account, such as mobile phones, personal digital assistants (PDAs), key fobs, and contactless payment chips.

In accordance with the disclosed subject matter herein, a method for processing one or more payment card transactions for a payment card using a payment processing system in communication with a computer readable storage medium generally includes receiving an authorization request from an acquirer and a corresponding authorization response from a card issuer, the authorization response including a status identifier for the payment card, associating the payment card with a payment card listing based on the status identifier, the payment card listing indicating status information relating to the payment card, and storing the payment card listing in the computer readable storage medium, such as in a database, look-up table, flat file, or other data structure.

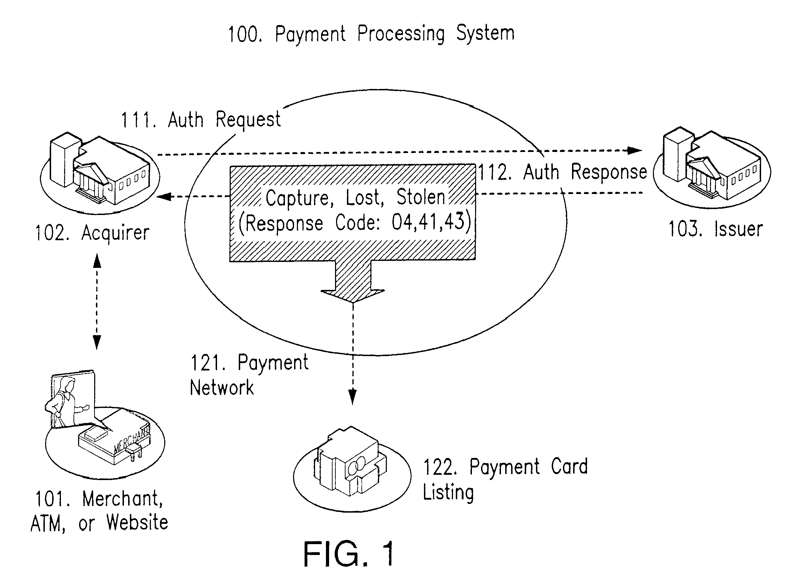

FIG. 1 is a schematic diagram illustrating an exemplary payment processing system 100. Payment processing system 100 can allow for payment-by-account number transactions in which merchants and card issuers do not necessarily have a one-to-one relationship. A payment processing system 100, for example and without limitation a credit card payment system, can utilize a payment network 112, such as the MasterCard® payment card system interchange network. MasterCard® payment card system interchange network is a proprietary communications standard promulgated by MasterCard International Incorporated® based on the ISO 8583 message format for the exchange of financial transaction data between financial institutions that are members of MasterCard International Incorporated. (MasterCard is a registered trademark of MasterCard International Incorporated located in Purchase, N.Y.)

In payment processing system 100, a financial institution, such as an issuer 103, can issue an account, such as a credit card account or a debit card account, to a cardholder, who can use the payment account card to tender payment for a purchase from a merchant 101 or to conduct a transaction at an ATM or website 101. To accept payment with the payment account card, merchant 101 can establish an account with a financial institution that is part of the financial payment system. This financial institution can be referred to as the "merchant bank" or the "acquiring bank," or herein as "acquirer 102." When a cardholder tenders payment for a purchase with a payment account card, the merchant, ATM, or website 101 can request authorization from acquirer 102 for the amount of the purchase. The request can be performed over the telephone, or through the use of a point-of-sale terminal or online via a website, which can read the cardholder's account information from the magnetic stripe on the payment account card, from a smart card using contact pads, or contactlessly from a near-field communication device and communicate electronically with the transaction processing computers of acquirer 102. Alternatively, acquirer 102 can authorize a third party to perform transaction processing on its behalf. In this case, the point-of-sale terminal can be configured to communicate with the third party. Such a third party can be referred to as a "merchant processor" or an "acquiring processor."

Using payment network 121, the computers of acquirer 102 or the merchant processor can communicate an authorization request 111 to the computers of issuer 103 to determine whether the cardholder's account is in good standing and whether the purchase is covered by the cardholder's available credit line or account balance. Based on these determinations, the authorization request 111 can be declined or accepted, and an authorization response 112 can be transmitted from the issuer 103 to the acquirer 102, and then to the merchant, ATM, or website 101. The authorization response 112 can include, among other things, a result of the determination that the transaction is approved or declined and/or information about the status of the payment card or payment account.

Information that the issuer 103 can convey in an authorization response 112 can include information that the payment card has been reported by the customer to be lost or stolen. That is, a customer can report to the issuer 103 that the payment card has been lost or stolen, and the issuer 103 can update their records to reflect the status of the payment card as lost or stolen. As such, if the issuer 103 receives an authorization request 111 for a transaction performed with the payment card that has been reported lost or stolen, the issuer 103 can provide the status information of the payment card in the authorization response 112 to the merchant 101 via the acquirer 102 and payment network 121. By way of example and not limitation, the authorization response can include a status identifier to represent that the payment card has been reported to be lost or stolen. Also by way of example and not limitation, the status identifier can include a numerical code corresponding to a certain status. For example, status identifier codes "04", "41" and "43" can indicate that the payment card is to be captured or lost or stolen, respectively.

At certain times, the issuer 103 can be unavailable to process an authorization request 111, for example, if the processing equipment used by issuer 103 is unable, at least temporarily, to communicate with the payment network 121. In this case, the payment network 121 can process the authorization request 111 without the issuer 103, and thus act as a stand-in, or proxy, for the issuer 103. The payment network 121 itself can be configured to respond to the authorization request 111, or in some embodiments, a separate entity, such as a bank working in cooperation with the issuer 103 or the payment network 121 can act as a proxy for the issuer 103 when the issuer 103 is unavailable.

As the payment network 121 or other proxy is generally unable to access the proprietary financial information about the payment account stored by the issuer 103 when the issuer 103 is unavailable, the payment network can process the authorization request 111 according to certain rules. For example, if the issuer 103 is unavailable, the payment network 121 can still verify that the authorization request 111 is requesting a transaction for a valid payment card or payment account. The payment network 121 can also include rules to approve all transactions under a certain monetary value and reject all transactions over a certain monetary value.

Additionally, the payment network 121 can store information or rules for handling authorization of transactions for payment cards in one or more listings 122. For example and without limitation, a so-called "negative listing" can include a listing of payment cards for which the payment network 121 can always decline a transaction when the issuer 103 is unavailable. Conversely, a so-called "positive listing" can include a listing of payment cards for which the payment network 121 can always approve a transaction when the issuer 103 is unavailable. Generally, the issuer 103 can provide one or more listings 122 to the payment card network 121. For example, when a payment card is to be captured or reported lost or stolen, as discussed herein, the issuer 103 can include the payment card in a negative listing 122 and provide the negative listing 122 to the payment network 121. However, if the issuer 103 fails to update the negative listing 122 to the payment network 121 in a timely manner, or does not provide it at all, transactions performed using the unreported lost or stolen card may be approved. In this manner, fraudulent transactions can be approved that would otherwise be declined if the issuer 103 were available. That is, if the issuer 103 is unavailable, and thus unable to respond to an authorization request 111 by indicating that the payment card is to be captured or lost or stolen, the payment network 121 may automatically approve the transaction, as discussed herein.

As such, in some embodiments, payment network 121 can be configured to receive the authorization request 111 from the acquirer 102 and the authorization response 112 from the issuer 103. The payment network 121 can then associate the payment card with a payment card listing based on the authorization response 112. For example, the authorization response 112 can include a status identifier indicating that the payment card is to be captured or reported lost or stolen. Based on this status identifier, the payment network can associate the payment card in this transaction with a negative listing 122. The payment network 121 can then store payment card listing 122 in a computer readable storage medium for use in future transactions. For example, if the issuer 103 later becomes unavailable to process a further transaction involving the payment card stored in listing 122, the payment network 121 can identify the payment card in the listing 122 and provide an authorization response 112 to decline the transaction based on the determination that the payment card is in the listing 122, as discussed further herein.

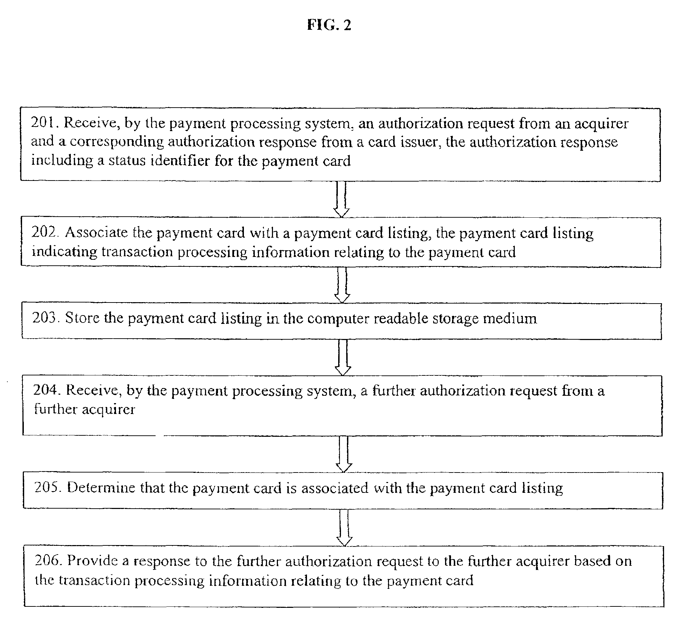

Referring to FIG. 2, a method for processing one or more payment card transactions for a payment card using a payment processing system in communication with a computer readable storage medium is shown. The method can be performed using a payment processing system, for example and without limitation the payment processing system 100 of FIG. 1. At 201, the payment network 121 can receive an authorization request 111 from an acquirer 102 and a corresponding authorization response 112 from a card issuer 103. The authorization response 112 can include, among other things, status information for the payment card, for example in the form of a status identifier. At 202, the payment card can be associated with a payment card listing based on the status identifier. For example, the authorization response 112 can include the status identifier "41," indicating that the card is reported lost. Indeed, the authorization response 112 can include any status identifier used by the payment processing system 100 to indicate a corresponding status of the payment card. Based on this status identifier, the payment network 121 can associate the payment card with a payment card listing 122 indicating the status of the payment card. For example, if the authorization response 112 includes the status identifier "41," payment processing system can update payment card listing 122 to indicate that the payment card is reported lost and/or that future transactions involving the payment card should be declined.

At 203, the payment card listing 122 can be stored in a computer readable storage medium, which can include one or more databases or other data structures. In some embodiments, the payment processing system 100 can be configured to store negative payment card listings in a database only for negative payment card listings. Additionally or alternatively, the payment processing system 100 can be configured to store positive payment card listings in a database or data structure only for positive payment card listings. As a further alternative, the payment processing system 100 can be configured to store multiple types of payment card listings 122, for example positive and negative payment card listings, in a general payment card listing database or data structure. For example, payment processing system 100 can be configured to store each payment card in a general payment card listing 122 database along with the status identifier received by the payment network 121 corresponding to the payment card and/or with transaction processing information, which can, for example, include an indication that future transactions involving the payment card should be approved or declined. As such, payment card listing 122 can indicate transaction processing information relating to the payment card, for example, by storing transaction processing information in the payment card listing 122 for each payment card based on the status identifier, by storing the status identifier in the payment card listing 122 for each payment card such that the transaction processing information can be determined based on the status identifier, or by storing the payment card in a particular type of payment card listing 122 based on the status identifier such that the transaction processing information can be determined based on the type of payment card listing 122 in which the payment card is stored. In some embodiments, the payment processing system 100 can be configured to store each payment card listing 122 only for a certain period of time. For example, each payment card listing 122 can be stored until the payment card's expiry date or for some other set period. For purpose of illustration, each payment card listing 122 can be stored for a predetermined period of time, for example for a period of six months or for a storage period determined by the issuer corresponding to the payment card.

At 204, the payment network 121 can receive a further authorization request 111 involving the same payment card from an acquirer 102, which can be the same or different acquirer 102 that received the request 111 at 201. For purpose of illustration, at 204, the issuer 103 can be unable to communicate with payment network 121, and thus be unable to respond to the authorization request 111. As such, at 205, payment network 121 can process the authorization request 111 according to various rules, which can include determining whether the payment card is associated with the payment card listing 122. At 206, if payment network 121 determines that the payment card is associated with the payment card listing 122, the payment network 121 can provide a response to the further authorization request to the acquirer 102 based on transaction processing information indicated by the payment card listing 122. For example, if the payment card listing 122 is a negative listing, the transaction is declined. However, if payment network 121 determines that the payment card is not associated with the payment card listing 122, the payment network 121 can approve the transaction and/or can perform further checks to determine if the transaction should be approved or declined.

According to another aspect of the disclosed subject matter, the payment network 121 can also store positive listings 122. Positive listings can include listings corresponding to positive status identifiers indicating, for example, that a transaction has been authorized or that a payment card account involved in the transaction has a preferred status, such as a VIP status or high limit. Based on a positive status identifier, at 203, payment network 121 can associate a payment card with a positive listing 122, and as discussed above, at 206, the payment network can provide a response to the acquirer 102 to authorize the transaction based on the payment card being associated with the positive listing 122.

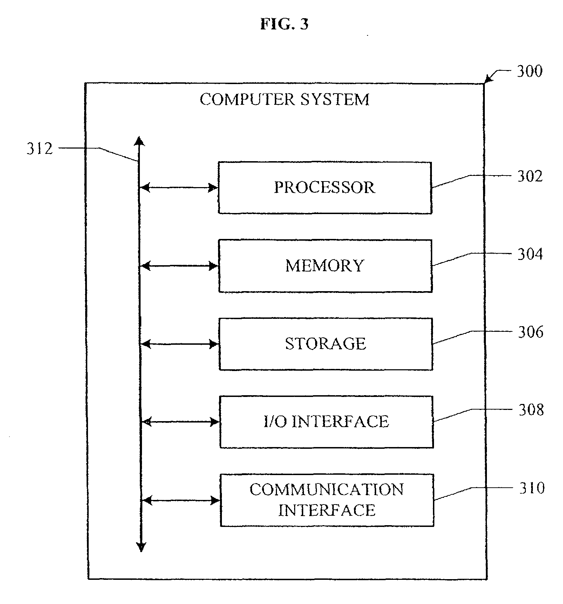

FIG. 3 illustrates an exemplary computer system 300 according to the disclosed subject matter. In some embodiments, one or more computer systems 300 perform one or more steps of one or more methods described or illustrated herein. In some embodiments, one or more computer systems 300 provide functionality described or illustrated herein. In some embodiments, software running on one or more computer systems 300 performs one or more steps of one or more methods described or illustrated herein or provides functionality described or illustrated herein. Some embodiments include one or more portions of one or more computer systems 300. Herein, reference to a computer system can encompass a computing device, and vice versa, where appropriate. Moreover, reference to a computer system can encompass one or more computer systems, where appropriate.

This disclosure contemplates any suitable number of computer systems 300, which may be used as the acquirer, issuer, and/or payment network computing system. This disclosure contemplates computer system 300 taking any suitable physical form. As example and not by way of limitation, computer system 300 can be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 300 can include one or more computer systems 300; be unitary or distributed; span multiple locations; span multiple machines; span multiple data centers; or reside in a cloud, which can include one or more cloud components in one or more networks. Where appropriate, one or more computer systems 300 can perform without substantial spatial or temporal limitation one or more steps of one or more methods described or illustrated herein. As an example and not by way of limitation, one or more computer systems 300 can perform in real time or in batch mode one or more steps of one or more methods described or illustrated herein. One or more computer systems 300 can perform at different times or at different locations one or more steps of one or more methods described or illustrated herein, where appropriate.

In some embodiments, computer system 300 includes a processor 302, memory 304, storage 306, an input/output (I/O) interface 308, a communication interface 310, and a bus 312. Although this disclosure describes and illustrates a particular computer system having a particular number of particular components in a particular arrangement, this disclosure contemplates any suitable computer system having any suitable number of any suitable components in any suitable arrangement.

In some embodiments, processor 302 includes hardware for executing instructions, such as those making up a computer program. As an example and not by way of limitation, to execute instructions, processor 302 can retrieve (or fetch) the instructions from an internal register, an internal cache, memory 304, or storage 306; decode and execute them; and then write one or more results to an internal register, an internal cache, memory 304, or storage 306. In particular embodiments, processor 302 can include one or more internal caches for data, instructions, or addresses. This disclosure contemplates processor 302 including any suitable number of any suitable internal caches, where appropriate. As an example and not by way of limitation, processor 302 can include one or more instruction caches, one or more data caches, and one or more translation lookaside buffers (TLBs). Instructions in the instruction caches can be copies of instructions in memory 304 or storage 306, and the instruction caches can speed up retrieval of those instructions by processor 302. Data in the data caches can be copies of data in memory 304 or storage 306 for instructions executing at processor 302 to operate on; the results of previous instructions executed at processor 302 for access by subsequent instructions executing at processor 302 or for writing to memory 304 or storage 306; or other suitable data. The data caches can speed up read or write operations by processor 302. The TLBs can speed up virtual-address translation for processor 302. In some embodiments, processor 302 can include one or more internal registers for data, instructions, or addresses. This disclosure contemplates processor 302 including any suitable number of any suitable internal registers, where appropriate. Where appropriate, processor 302 can include one or more arithmetic logic units (ALUs); be a multi-core processor; or include one or more processors 302. Although this disclosure describes and illustrates a particular processor, this disclosure contemplates any suitable processor.

In some embodiments, memory 304 includes main memory for storing instructions for processor 302 to execute or data for processor 302 to operate on. As an example and not by way of limitation, computer system 300 can load instructions from storage 306 or another source (such as, for example, another computer system 300) to memory 304. Processor 302 can then load the instructions from memory 304 to an internal register or internal cache. To execute the instructions, processor 302 can retrieve the instructions from the internal register or internal cache and decode them. During or after execution of the instructions, processor 302 can write one or more results (which can be intermediate or final results) to the internal register or internal cache. Processor 302 can then write one or more of those results to memory 304. In some embodiments, processor 302 executes only instructions in one or more internal registers or internal caches or in memory 304 (as opposed to storage 306 or elsewhere) and operates only on data in one or more internal registers or internal caches or in memory 304 (as opposed to storage 306 or elsewhere). One or more memory buses (which can each include an address bus and a data bus) can couple processor 302 to memory 304. Bus 312 can include one or more memory buses, as described below. In particular embodiments, one or more memory management units

(MMUs) reside between processor 302 and memory 304 and facilitate accesses to memory 304 requested by processor 302. In some embodiments, memory 304 includes random access memory (RAM). This RAM can be volatile memory, where appropriate. Where appropriate, this RAM can be dynamic RAM (DRAM) or static RAM (SRAM). Moreover, where appropriate, this RAM can be single-ported or multi-ported RAM. This disclosure contemplates any suitable RAM. Memory 304 can include one or more memories 304, where appropriate. Although this disclosure describes and illustrates particular memory, this disclosure contemplates any suitable memory.

In some embodiments, storage 306 includes mass storage for data or instructions. As an example and not by way of limitation, storage 306 can include a hard disk drive (HDD), a floppy disk drive, flash memory, an optical disc, a magneto-optical disc, magnetic tape, or a Universal Serial Bus (USB) drive or a combination of two or more of these. Storage 306 can include removable or non-removable (or fixed) media, where appropriate. Storage 306 can be internal or external to computer system 300, where appropriate. In some embodiments, storage 306 is non-volatile, solid-state memory. In some embodiments, storage 306 includes read-only memory (ROM). Where appropriate, this ROM can be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 306 taking any suitable physical form. Storage 306 can include one or more storage control units facilitating communication between processor 302 and storage 306, where appropriate. Where appropriate, storage 306 can include one or more storages 306. Although this disclosure describes and illustrates particular storage, this disclosure contemplates any suitable storage.

In some embodiments, I/O interface 308 includes hardware, software, or both, providing one or more interfaces for communication between computer system 300 and one or more I/O devices. Computer system 300 can include one or more of these I/O devices, where appropriate. One or more of these I/O devices can enable communication between a person and computer system 300. As an example and not by way of limitation, an I/O device can include a keyboard, keypad, microphone, monitor, mouse, printer, scanner, speaker, still camera, stylus, tablet, touch screen, trackball, video camera, another suitable I/O device or a combination of two or more of these. An I/O device can include one or more sensors. This disclosure contemplates any suitable I/O devices and any suitable I/O interfaces 308 for them. Where appropriate, I/O interface 308 can include one or more device or software drivers enabling processor 302 to drive one or more of these I/O devices. I/O interface 308 can include one or more I/O interfaces 308, where appropriate. Although this disclosure describes and illustrates a particular I/O interface, this disclosure contemplates any suitable I/O interface.

In some embodiments, communication interface 310 includes hardware, software, or both providing one or more interfaces for communication (such as, for example, packet-based communication) between computer system 300 and one or more other computer systems 300 or one or more networks. As an example and not by way of limitation, communication interface 310 can include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 310 for it. As an example and not by way of limitation, computer system 300 can communicate with an ad hoc network, a personal area network (PAN), a local area network (LAN), a wide area network (WAN), a metropolitan area network (MAN), or one or more portions of the Internet or a combination of two or more of these. One or more portions of one or more of these networks can be wired or wireless. As an example, computer system 300 can communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 300 can include any suitable communication interface 310 for any of these networks, where appropriate. Communication interface 310 can include one or more communication interfaces 310, where appropriate. Although this disclosure describes and illustrates a particular communication interface, this disclosure contemplates any suitable communication interface.

In some embodiments, bus 312 includes hardware, software, or both coupling components of computer system 300 to each other. As an example and not by way of limitation, bus 312 can include an Accelerated Graphics Port (AGP) or other graphics bus, an Enhanced Industry Standard Architecture (EISA) bus, a frontside bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 312 can include one or more buses 312, where appropriate. Although this disclosure describes and illustrates a particular bus, this disclosure contemplates any suitable bus or interconnect.

Herein, a computer-readable non-transitory storage medium or media can include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium can be volatile, non-volatile, or a combination of volatile and non-volatile, where appropriate.

While there have been described what are believed to be the preferred embodiments of the present invention, those skilled in the art will recognize that further changes and modifications may be made thereto without departing from the spirit of the invention, and it is intended to claim all such changes and modifications that are within the spirit of the invention.

It also will be understood that the systems and methods of the present invention can be implemented using any suitable combination of hardware and software. The software (i.e., instructions) for implementing and operating the aforementioned systems and methods can be provided on computer-readable media, which can include without limitation, firmware, memory, storage devices, micro controllers, microprocessors, integrated circuits, ASICS, on-line downloadable media, and other available media.

### CLAUSES:

The disclosure herein also includes the content of the following clauses:
   1. A system for processing one or more payment card transactions for a payment card using a payment processing system, the system comprising:
      one or more processors; and
      one or more computer readable storage media embodying software that is configured when executed by one or more of the processors to:
         receive, by a payment processing system, an authorization request from an acquirer and a corresponding authorization response from a card issuer, the authorization response including a status identifier for a payment card;
         associate the payment card with a payment card listing, the payment card listing indicating transaction processing information relating to the payment card based on the status identifier; and
         store the payment card listing in one or more of the computer readable storage media.
2. The system of clause 1, wherein the software is further configured when executed to:
   receive, by the payment processing system, a further authorization request from a further acquirer;
   determine that the payment card is associated with the payment card listing; and
   provide a response to the further authorization request to the further acquirer based on the transaction processing information relating to the payment card.
3. The system of clause 2, wherein the payment card listing comprises a negative listing.
4. The system of clause 3, wherein the payment card is associated with the negative listing when the status identifier indicates that the payment card is to be captured or lost or stolen.
5. The system of clause 3, wherein the negative listing indicates that future transactions involving the payment card should be declined.
6. The system of clause 3, wherein the software is further configured to provide a response to the further authorization request to the further acquirer based on the determination that the payment card is associated with the negative listing by providing a response to the further acquirer to decline the transaction.
7. The system of clause 2, wherein the payment card listing comprises a positive listing.
8. The system of clause 7, wherein the payment card is associated with the positive listing when the status identifier indicates that the transaction involving the payment card is authorized or that the payment card has a VIP status.
9. The system of clause 7, wherein the positive listing indicates that future transactions involving the payment card should be approved.
10. The system of clause 7, wherein the software is further configured to provide a response to the further authorization request to the further acquirer based on the determination that the payment card is associated with the positive listing by providing a response to the further acquirer to authorize the transaction.
11. A method for processing one or more payment card transactions for a payment card using a payment processing system in communication with a computer readable storage medium, the method comprising:
   receiving, by the payment processing system, an authorization request from an acquirer and a corresponding authorization response from a card issuer, the authorization response including a status identifier for the payment card;
   associating the payment card with a payment card listing, the payment card listing indicating transaction processing information relating to the payment card based on the status identifier; and
   storing the payment card listing in the computer readable storage medium.
12. The method of clause 11, further comprising:
   receiving, by the payment processing system, a further authorization request from a further acquirer;
   determining that the payment card is associated with the payment card listing; and
   providing a response to the further authorization request to the further acquirer based on the transaction processing information relating to the payment card.
13. The method of clause 12, wherein the payment card listing comprises a negative listing.
14. The method of clause 13, wherein the payment card is associated with the negative listing when the status identifier indicates that the payment card is to be captured or lost or stolen.
15. The method of clause 13, wherein the negative listing indicates that future transactions involving the payment card should be declined.
16. The method of clause 13, wherein providing a response to the further authorization request to the further acquirer based on the determination that the payment card is associated with the negative listing comprises providing a response to the further acquirer to decline the transaction.
17. The method of clause 12, wherein the payment card listing comprises a positive listing.
18. The method of clause 17, wherein the payment card is associated with the positive listing when the status identifier indicates that the transaction involving the payment card is authorized or that the payment card has a VIP status.
19. The method of clause 17, wherein the positive listing indicates that future transactions involving the payment card should be approved.
20. The method of clause 17, wherein providing a response to the further authorization request to the further acquirer based on the determination that the payment card is associated with the positive listing comprises providing a response to the further acquirer to authorize the transaction.
21. A payment network for processing one or more payment card transactions for a payment card, the payment network comprising:
   a communication interface;
   one or more processors connected to the communication interface; and
   one or more computer readable storage media connected to the communication interface and to one or more of the processors, and embodying software that is configured when executed by one or more of the processors to:
      receive, by the communication interface, an authorization request from an acquirer and a corresponding authorization response from a card issuer, the authorization response including a status identifier for a payment card;
      associate the payment card with a payment card listing, the payment card listing indicating transaction processing information relating to the payment card based on the status identifier; and
      store the payment card listing in one or more of the computer readable storage media.
22. The payment network of clause 21, wherein the software is further configured when executed to:
   receive, by the communication interface, a further authorization request from a further acquirer;
   determine that the payment card is associated with the payment card listing; and
   provide a response to the further authorization request to the further acquirer based on the transaction processing information relating to the payment card.
23. The payment network of clause 22, wherein the payment card listing comprises a negative listing.
24. The payment network of clause 23, wherein the payment card is associated with the negative listing when the status identifier indicates that the payment card is lost or stolen.
25. The payment network of clause 23, wherein the negative listing indicates that future transactions involving the payment card should be declined.
26. The payment network of clause 23, wherein the software is further configured to provide a response to the further authorization request to the further acquirer based on the determination that the payment card is associated with the negative listing by providing a response to the further acquirer to decline the transaction.
27. The payment network of clause 22, wherein the payment card listing comprises a positive listing.
28. The payment network of clause 27, wherein the payment card is associated with the positive listing when the status identifier indicates that the transaction involving the payment card is authorized or that the payment card has a VIP status.
29. The payment network of clause 27, wherein the positive listing indicates that future transactions involving the payment card should be approved.
30. The payment network of clause 27, wherein the software is further configured to provide a response to the further authorization request to the further acquirer based on the determination that the payment card is associated with the positive listing by providing a response to the further acquirer to authorize the transaction.

## Claims

1. A method for processing one or more payment card transactions for a payment card which is implemented using one or more processors to:
receive an authorization request from an acquirer and a corresponding authorization response from a card issuer, the authorization response including a status identifier for the payment card;
associate the payment card with a payment card listing, the payment card listing indicating transaction processing information relating to the payment card based on the status identifier; and
store the payment card listing.

2. The method of claim 1 further using said one or more of the processors to:
receive a further authorization request from a further acquirer;
determine that the payment card is associated with the payment card listing; and
provide a response to the further authorization request to the further acquirer based on the transaction processing information relating to the payment card.

3. The method of claim 2, wherein the payment card listing comprises a negative listing.

4. The method of claim 3, wherein the payment card is associated with the negative listing when the status identifier indicates that the payment card is to be captured or lost or stolen.

5. The method of claim 3, wherein the negative listing indicates that future transactions involving the payment card should be declined.

6. The method of claim 3, wherein to provide a response to the further authorization request to the further acquirer based on the determination that the payment card is associated with the negative listing is to prove a response to the further acquirer to decline the transaction.

7. The method of claim 2, wherein the payment card listing comprises a positive listing.

8. The method of claim 7, wherein the payment card is associated with the positive listing when the status identifier indicates that the transaction involving the payment card is authorized or that the payment card has a VIP status.

9. The method of claim 7, wherein the positive listing indicates that future transactions involving the payment card should be approved.

10. The method of claim 7, wherein to provide a response to the further authorization request to the further acquirer based on the determination that the payment card is associated with the positive listing is to provide a response to the further acquirer to authorize the transaction.

11. One or more computer readable storage media storing computer-executable instructions that when executed by said one or more processors perform the method recited in any one of claims 1 to 10.

12. A system for processing one or more payment card transactions for a payment card using a payment processing system, the system comprising:
one or more processors; and
one or more computer readable storage media storing computer-executable instructions that when executed by said one or more processors perform the method recited in any one of claims 1 to 10.

13. A payment network for processing one or more payment card transactions for a payment card, the payment network comprising:
a communication interface;
one or more processors connected to the communication interface; and
one or more computer readable storage media connected to the communication interface and to one or more of the processors, storing computer-executable instructions that when executed by said one or more processors perform the method recited in any one of claims 1 to 10.
